# EUROPEAN PATENT APPLICATION

(11) **EP 2 632 103 A1**
(43) Date of publication of application: **28.08.2013**
(21) Application number: 11843611.2
(22) Date of filing: 22.09.2011
(51) Int. Cl.: H04L 29/06

(54) **IMS MULTIMEDIA COMMUNICATION METHOD AND SYSTEM, TERMINAL AND IMS CORE NETWORK**

(30) Priority: 25.11.2010 CN 201010559798
(71) Applicant: ZTE Corporation, Shenzhen, Guangdong 518057 (CN)
(72) Inventor: LIANG, Jiehui, Guangdong 518057 (CN); SHI, Yuanqing, Guangdong 518057 (CN); KANG, Wangxing, Guangdong 518057 (CN)
(74) Representative: Smith, Jeremy Robert
(86) International application number: PCT/CN2011/080027
(87) International publication number: WO 2012/068922

(57) **Abstract**

An IP MultiMedia Subsystem (IMS) multimedia communication method and system, a terminal and an IMS core network are disclosed in the present document, wherein, the IMS multimedia communication method includes: performing signaling negotiation between a terminal and an IMS core network, and establishing an IP security-Encapsulate Secure Payload (IPSec-ESP) security association for media transmission between the terminal and the IMS core network during the process of signaling negotiation; and performing transmission of media contents through the IPSec-ESP security association for media transmission between the terminal and the IMS core network. In the present document, it guarantees the security of the media contents transmitted between the terminal and the IMS core network, solves the security problem of multimedia communication in the IMS in the related art, and avoids that the media contents are maliciously stolen and falsified by others during the transmission between the terminal and the IMS core network.

## Description

### Technical Field

The present document relates to the field of communication, and specifically, to an IMS multimedia communication method and system, a terminal and an IMS core network.

### Background of the Related Art

With the development of the 3rd Generation (3G) network, more and more multimedia services can be deployed in an IP MultiMedia Subsystem (IMS) core network, such as Video Sharing (VS), Voice over IP (VoIP), Video and Voice over IP (V2IP) and Push To Talk over Cellular (PoC) and so on. All these services are transmitted by using an IP protocol but not by using a Signal System 7 (SS7) of the 2nd Generation (2G) network.

The introduction of the IP protocol makes the deployment of packet switched services in the IMS core network extremely convenient, and also makes the IMS core network entirely open and easy to access. Since the diversity and complexity of access networks, the security problem of multimedia communication in the IMS is caused.

### Summary of the Invention

The present document is to provide an IMS multimedia communication method and system, a terminal and an IMS core network, to at least solve the above problem.

According to one aspect of the present document, an IP MultiMedia Subsystem (IMS) multimedia communication method is provided, which comprises: performing signaling negotiation between a terminal and an IMS core network, and establishing an IP security-Encapsulate Secure Payload (IPSec-ESP) security association for media transmission between the terminal and the IMS core network during the process of signaling negotiation; and performing transmission of media contents through the IPSec-ESP security association for media transmission between the terminal and the IMS core network.

Preferably, before performing signaling negotiation between the terminal and the IMS core network, the method further comprises: the terminal performing registration to the IMS core network, and an IPSec-ESP security association for signaling negotiation being established between the terminal and the IMS core network during the process of registration; and performing signaling negotiation between the terminal and the IMS core network comprises: performing signaling negotiation through the IPSec-ESP security association for signaling negotiation between the terminal and the IMS core network.

Preferably, the terminal performing registration to the IMS core network and the IPSec-ESP security association for signaling negotiation being established between the terminal and the IMS core network during the process of registration comprises: the terminal sending an IMS registration request message to a Proxy-Call Session Control Function (P-CSCF) in the IMS core network, wherein, the IMS registration request message includes: information of the terminal and first security association information of the terminal; the P-CSCF saving the information in the received IMS registration request message locally, and returning an authentication challenge message to the terminal, wherein, the authentication challenge message includes: second security association information and information of the P-CSCF; and after the terminal receives the authentication challenge message, establishing the IPSec-ESP security association for signaling negotiation through the first security association information and the second security association information of P-CSCF between the terminal and the P-CSCF.

Preferably, the information of the terminal includes: an IP address of the terminal, IMS user information and an algorithm list supported by the terminal; after the P-CSCF saves the information in the received IMS registration request message locally and before the P-CSCF returns the authentication challenge message to the terminal, the method further comprises: the P-CSCF acquiring a card key corresponding to the IMS user information; the P-CSCF using the card key and a random number to obtain a first Authentication and Key Agreement (AKA) authentication quintuple, wherein, the first AKA authentication quintuple includes a first Integrity Key (IK), a first Cipher Key (CK) and a first Response (RES) field.

Preferably, the authentication challenge message further includes: the first RES field and the random number; after the terminal receives the authentication challenge message, the method further comprises: an IP Multimedia Services Identity Module (ISIM) or a Universal Subscriber Identity Module (USIM) in the terminal using a local card key and random number to obtain a second AKA authentication quintuple, wherein, the second AKA authentication quintuple includes: a second IK, a second CK and a second RES field; the terminal judging whether the second RES field is identical with the first RES field; if it is identical, the terminal determining that an identity authentication of the P-CSCF is successful.

Preferably, after establishing the IPSec-ESP security association for signaling negotiation through the first security association information and the second security association information of P-CSCF between the terminal and the P-CSCF, the method further comprises: the terminal sending an IMS authentication verification request message to the P-CSCF through the IPSec-ESP security association for signaling negotiation between the terminal and the P-CSCF, wherein, the IMS authentication verification request message includes: the information of the terminal, the first security association information of the terminal and the second RES field; after receiving the IMS authentication verification request message, the P-CSCF verifying whether the information of the terminal and the first security association information of the terminal are identical with the information saved locally; if identical, the P-CSCF continuing to judge whether the second RES field is identical with the first RES field, and in the condition that it is identical, determining that an identity authentication of the terminal is successful and the registration is successful; and the P-CSCF returning an identity authentication success message to the terminal.

Preferably, the first security association information includes: first Secure Parameter Index (SPI) information randomly generated by the terminal and port information corresponding to the first SPI information, and the second security association information includes: second SPI information randomly generated by the P-CSCF and port information corresponding to the second SPI information, and the information of the P-CSCF includes: an IP address of the P-CSCF and an algorithm list supported by the P-CSCF; establishing the IPSec-ESP security association for signaling negotiation through the first security association information and the second security association information of P-CSCF between the terminal and the P-CSCF comprises: the terminal using the first SPI information and the port information corresponding to the first SPI information, the IP address of the P-CSCF, algorithms supported by both the terminal and the P-CSCF, the second IK and the second CK to establish the IPSec-ESP security association for signaling negotiation between the terminal and the P-CSCF, wherein, the algorithms supported by both the terminal and the P-CSCF are selected from the algorithm list supported by the terminal and the algorithm list supported by the P-CSCF; the P-CSCF using the second SPI information and the port information corresponding to the second SPI information, the IP address of the terminal, the algorithms supported by both the terminal and the P-CSCF, the first IK and the first CK to establish the IPSec-ESP security association for signaling negotiation between the P-CSCF and the terminal.

Preferably, performing signaling negotiation through the IPSec-ESP security association for signaling negotiation between the terminal and the IMS core network, and establishing the IPSec-ESP security association for media transmission between the terminal and the IMS core network during the process of signaling negotiation comprises: the terminal sending an IMS session invitation request message to the P-CSCF, wherein, the IMS session invitation request message includes media information of the terminal and third SPI information randomly generated by the terminal; the P-CSCF saving the information in the received IMS session invitation request message, and forwarding the IMS session invitation request message to another terminal invited by the IMS session invitation request message; after receiving a response message returned by the another terminal, the P-CSCF informing a Media Gateway Control Function (MGCF) in the IMS core network to randomly generate fourth SPI information, and forwarding the response message to the terminal, wherein, the response message includes the fourth SPI information; the terminal using the third SPI information, the algorithms supported by both the terminal and the P-CSCF, the second IK and the second CK to establish the IPSec-ESP security association for media transmission between the terminal and the MGCF; and the MGCF using the fourth SPI information, the algorithms supported by both the terminal and the P-CSCF, the first IK and the first CK to establish the IPSec-ESP security association for media transmission between the MGCF and the terminal.

Preferably, performing transmission for the media contents through the IPSec-ESP security association for media transmission between the terminal and the IMS core network comprises: the terminal using the second IK, the second CK and the algorithms supported by both the terminal and the P-CSCF to cipher media contents required to be transmitted, and transmitting the ciphered media contents to the MGCF; and the MGCF using the first IK, the first CK and the algorithms supported by both the terminal and the P-CSCF to decipher the ciphered media contents; or, the MGCF using the first IK, the first CK and the algorithms supported by both the terminal and the P-CSCF to cipher the media contents required to be transmitted to the terminal, and transmitting the ciphered media contents to the terminal; and the terminal using the second IK, the second CK and the algorithms supported by both the terminal and the P-CSCF to decipher the ciphered media contents.

According to another aspect of the present document, an IP MultiMedia Subsystem (IMS) multimedia communication system is provided, which comprises: a terminal and an IMS core network, wherein, the terminal is configured to: perform signaling negotiation with the IMS core network, and establish an IP security-Encapsulate Secure Payload (IPSec-ESP) security association for media transmission between the terminal and the IMS core network during the process of signaling negotiation, and perform transmission of media contents through the IPSec-ESP security association for media transmission between the terminal and the IMS core network.

Preferably, the terminal is further configured to: before performing signaling negotiation with the IMS core network, perform registration to the IMS core network, and establish an IPSec-ESP security association for signaling negotiation between the terminal and the IMS core network during the process of registration, and perform signaling negotiation with the IMS core network through the IPSec-ESP security association for signaling negotiation.

According to another aspect of the present document, a terminal is provided, which comprises: a negotiation and establishment module, configured to: perform signaling negotiation with an IP MultiMedia Subsystem (IMS) core network, and establish an IP security-Encapsulate Secure Payload (IPSec-ESP) security association for media transmission between the terminal and the IMS core network during the process of signaling negotiation; and a media transmission module, configured to: send media contents to the IMS core network and/or receive media contents from the IMS core network through the IPSec-ESP security association for media transmission.

Preferably, the terminal further comprises a registration and establishment module, wherein: the registration and establishment module is configured to: before the negotiation and establishment module performs signaling negotiation with the IMS core network, perform registration to the IMS core network, and establish an IPSec-ESP security association for signaling negotiation between the registration and establishment module and the IMS core network during the process of registration; and the negotiation and establishment module is configured to: perform signaling negotiation with the IMS core network through the IPSec-ESP security association for signaling negotiation.

According to another aspect of the present document, an IP MultiMedia Subsystem (IMS) core network is provided, which comprises: a negotiation and establishment module, configured to: perform signaling negotiation with a terminal, and establish an IP security-Encapsulate Secure Payload (IPSec-ESP) security association for media transmission between the negotiation and establishment module and the terminal during the process of signaling negotiation; and a media transmission module, configured to: send media contents to the terminal and/or receive media contents from the terminal through the IPSec-ESP security association for media transmission.

Preferably, the IMS core network further comprises a signaling negotiation security association establishment module, wherein: the signaling negotiation security association establishment module is configured to: before the negotiation and establishment module performs signaling negotiation with the terminal, accept a registration of the terminal, and establish an IPSec-ESP security association for signaling negotiation between the signaling negotiation security association establishment module and the terminal during the process of registration; and the negotiation and establishment module is configured to: perform signaling negotiation with the terminal through the IPSec-ESP security association for signaling negotiation.

Through the present document, by establishing the IPSec-ESP security association for media transmission between the terminal and the IMS core network, it can perform transmission through the IPSec-ESP security association for media transmission when performing transmission of the media contents, thereby guaranteeing the security of the media contents transmitted between the terminal and the IMS core network, solving the security problem of multimedia communication in the IMS in the related art, and avoiding that the media contents are maliciously stolen and falsified by others during the transmission between the terminal and the IMS core network.

### Brief Description of Drawings

Here, the described accompanying drawings are used to provide a further understanding of the present document and constitute a part of the present document. The schematic examples of the present document and illustrations thereof are used to explain the present document, but they do not constitute an inappropriate limitation of the present document. In the drawings:
FIG. 1 is an architecture diagram of an IMS multimedia communication system according to the example of the present document.
FIG. 2 is a schematic diagram of structure of a terminal in the IMS multimedia communication system according to the example of the present document.
FIG. 3 is a structural diagram of an IMS core network in the IMS multimedia communication system according to the example of the present document.
FIG. 4 is a flow diagram of an IMS multimedia communication method according to the example of the present document.
FIG. 5 is a flow diagram of an IMS multimedia communication process according to the preferred example of the present document.

### Preferred Embodiments of the Present Invention

The present document will be described in detail with reference to the accompanying drawings and in combination with the examples below. It should be noted that the examples in the present document and the characteristics in the examples can be combined with each other in the condition of no conflict.

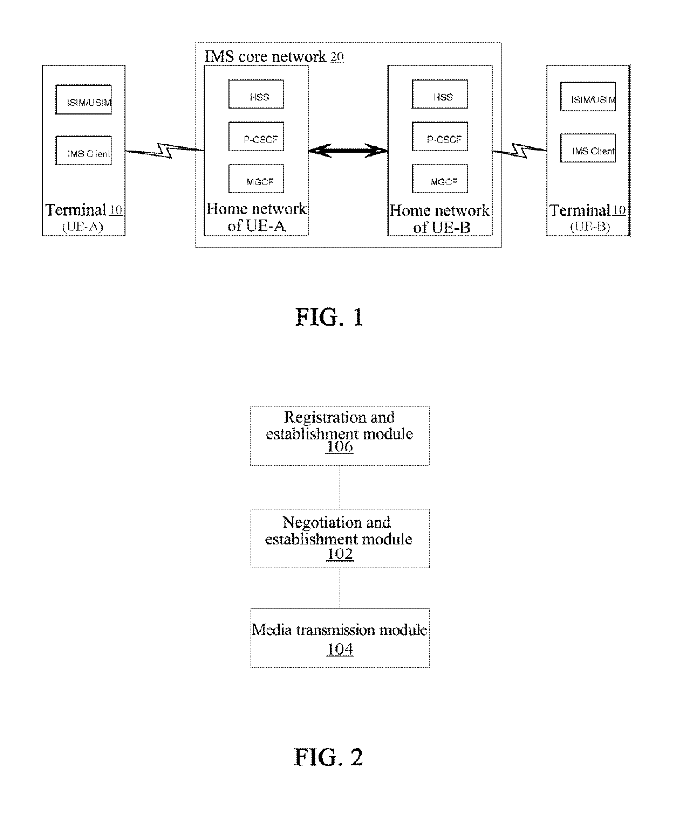

The IMS multimedia communication mainly contains two aspects of contents: signaling negotiation of control plane and media data (contents) transmission of user plane, and the former generally uses a Session Initiation Protocol (SIP), and the latter generally uses a Real-time Transport Protocol (RTP), wherein the SIP and RTP are only the illustrated descriptions, which is not limited to this. FIG. 1 is an architecture diagram of an IMS multimedia communication system according to the example of the present document, as shown in FIG. 1, it normally relates to a terminal 10 (i.e. a UE-A or a UE-B) and an IMS core network 20 ((i.e. a home network of the UE-A or a home network of the UE-B), and it mainly pays attention to the secure communication between the terminal 10 and the IMS core network 20 in the following examples of the present document, IMS core networks belong to dedicated wired networks, and it is not required to consider the security problem in general.

In order to protect that the media contents between the terminal and the IMS core network are not maliciously falsified and stolen, as shown in FIG. 1, the terminal (UE) 10 in the IMS multimedia communication system according to the example of the present document can be used to (or configured to) perform signaling negotiation with the IMS core network 20, and establish an IP security-Encapsulate Secure Payload (IPSec-ESP) security association for media transmission between the terminal 10 and the IMS core network 20 during the process of signaling negotiation, and perform transmission of the media contents between the terminal 10 and the IMS core network 20 through the IPSec-ESP security association for media transmission. For example, the media contents are sent to the IMS core network 20 and/or the media contents sent from the IMS core network 20 are received through the IPSec-ESP security association for media transmission.

Consequently, the IMS core network 20 also can be used to perform signaling negotiation with the terminal 10, and establish an IPSec-ESP security association for media transmission between the terminal 10 and the IMS core network 20 during the process of signaling negotiation, and perform transmission of the media contents between the terminal 10 and the IMS core network 20 through the IPSec-ESP security association for media transmission. For example, the media contents are sent to the terminal 10 and/or the media contents sent from the terminal 10 are received through the IPSec-ESP security association for media transmission.

As a preferred example, in order to protect the integrity and encryption protection of signaling negotiation data when the terminal 10 performs signaling negotiation with the IMS core network 20, the terminal 10 is also used to: before performing signaling negotiation with the IMS core network 20, perform registration to the IMS core network 20, and establish an IPSec-ESP security association for signaling negotiation between the terminal 10 and the IMS core network 20 during the process of registration, thus, the terminal 10 can perform signaling negotiation with the IMS core network 20 through the IPSec-ESP security association for signaling negotiation.

In practical applications, as shown in FIG. 1, the terminal 10 contains two parts: IP Multimedia Services Identity Module (ISIM)/Universal Subscriber Identity Module (USIM) and an IMS multimedia communication client (i.e. an IMS Client in FIG. 1). Wherein, the ISIM/USIM is mainly used to provide identity information of the terminal 10, and the IMS multimedia communication client is an application program used by a user. The network elements included in the IMS core network 20 mainly contain a Home Subscriber Server (HSS), a Proxy-Call Session Control Function (P-CSCF) and a Media Gateway Control Function (MGCF), wherein, the HSS saves IMS user information of the terminal and identity information of the ISIM/USIM and so on, the P-CSCF is mainly responsible for user registration and session negotiation of the multimedia communication, and the MGCF is responsible for forwarding the media contents.

As can be known from the above system, a structural diagram of the terminal 10 in the IMS multimedia communication system according to the example of the present document can be as shown in FIG. 2, which includes the following modules: a negotiation and establishment module 102, used to: perform signaling negotiation with the IMS core network 20, and establish the IPSec-ESP security association for media transmission between the terminal 10 and the IMS core network 20 during the process of signaling negotiation; and a media transmission module 104, used to: send the media contents to the IMS core network 20 and/or receive the media contents from the IMS core network 20 through the IPSec-ESP security association for media transmission. Thus, it is guaranteed that the media contents between the terminal and the IMS core network are not maliciously falsified and stolen.

Preferably, in order to protect the integrity and encryption protection of signaling negotiation data when the terminal 10 performs signaling negotiation with a negotiation and establishment module 202 of the IMS core network 20, as shown in FIG. 2, the terminal 10 can further include: a registration and establishment module 106, used to: before the negotiation and establishment module 102 performs signaling negotiation with the IMS core network 20, perform registration to the IMS core network 20, and establish the IPSec-ESP security association for signaling negotiation between the registration and establishment module 106 and the IMS core network 20 during the process of registration; thus, the negotiation and establishment module 102 can perform signaling negotiation with the IMS core network 20 through the IPSec-ESP security association for signaling negotiation.

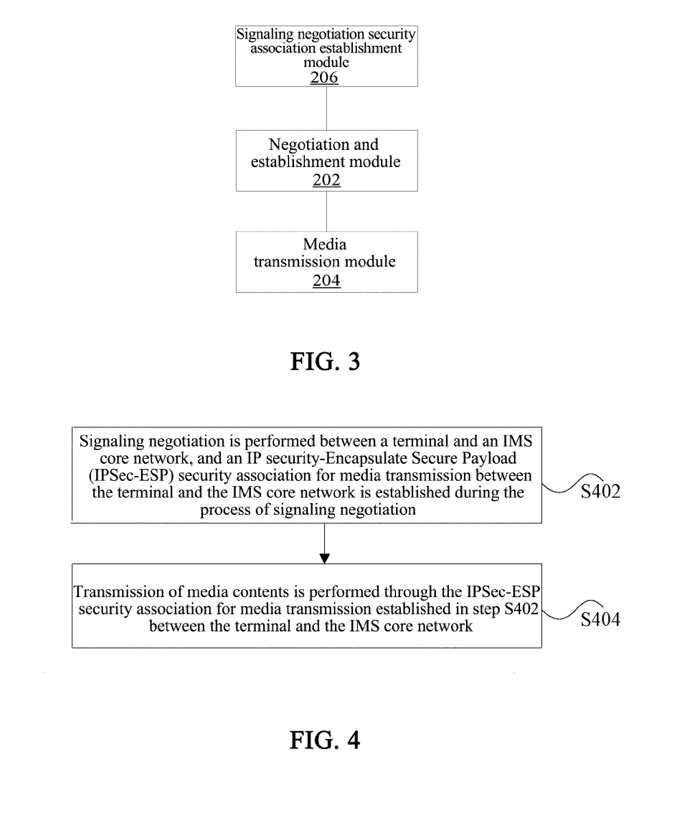

Similarly, a structural diagram of the IMS core network 20 in the IMS multimedia communication system according to the example of the present document is as shown in FIG. 3, which includes the following modules: the negotiation and establishment module 202, used to: perform signaling negotiation with the terminal 10, and establish the IPSec-ESP security association for media transmission between the negotiation and establishment module 202 and the terminal 10 during the process of signaling negotiation; and a media transmission module 204, used to: send the media contents to the terminal 10 and/or receive the media contents from the terminal 10 through the IPSec-ESP security association for media transmission. Thus, it is guaranteed that the media contents between the terminal and the IMS core network are not maliciously falsified and stolen.

Preferably, in order to protect the integrity and encryption protection of signaling negotiation data when the terminal 10 performs signaling negotiation with the negotiation and establishment module 202 of the IMS core network 20, as shown in FIG. 3, the IMS core network 20 also can include: a signaling negotiation security association establishment module 206, used to: before the negotiation and establishment module 202 performs signaling negotiation with the terminal 10, accept a registration of the terminal 10, and establish the IPSec-ESP security association for signaling negotiation between the signaling negotiation security association establishment module 206 and the terminal 10 during the process of registration; thus, the negotiation and establishment module 202 can perform signaling negotiation with the terminal 10 through the IPSec-ESP security association for signaling negotiation.

In the process of practical implementation, the above negotiation and establishment module 202 and the signaling negotiation security association establishment module 206 can be implemented by the P-CSCF, and the media transmission module 204 can be implemented by the MGCF.

In combination with the IMS multimedia communication system shown in FIG. 1, a method for the communication system performing IMS multimedia communication is as shown in FIG. 4, and the following steps are included.

In step S402, signaling negotiation is performed between a terminal and an IMS core network, and an IP security-Encapsulate Secure Payload (IPSec-ESP) security association for media transmission between the terminal and the IMS core network is established during the process of signaling negotiation.

In step S404, transmission of media contents is performed through the IPSec-ESP security association for media transmission established in step S402 between the terminal and the IMS core network.

In the example, by establishing the IPSec-ESP security association for media transmission between the terminal and the IMS core network, the transmission is performed through the IPSec-ESP security association for media transmission when performing transmission of the media contents, thereby guaranteeing the security of the media contents transmitted between the terminal and the IMS core network, solving the security problem of multimedia communication in the IMS in the related art, and avoiding that the media contents are maliciously stolen and falsified by others during the transmission between the terminal and the IMS core network.

In order to further protect the integrity of signaling negotiation data when the terminal performs signaling negotiation with the IMS core network, before the step S402, the terminal performs registration to the IMS core network, and establishes an IPSec-ESP security association for signaling negotiation between the terminal and the IMS core network during the process of registration; and when the signaling negotiation is performed between the terminal and the IMS core network in step S402, the signaling negotiation can be performed through the IPSec-ESP security association for signaling negotiation between the terminal and the IMS core network.

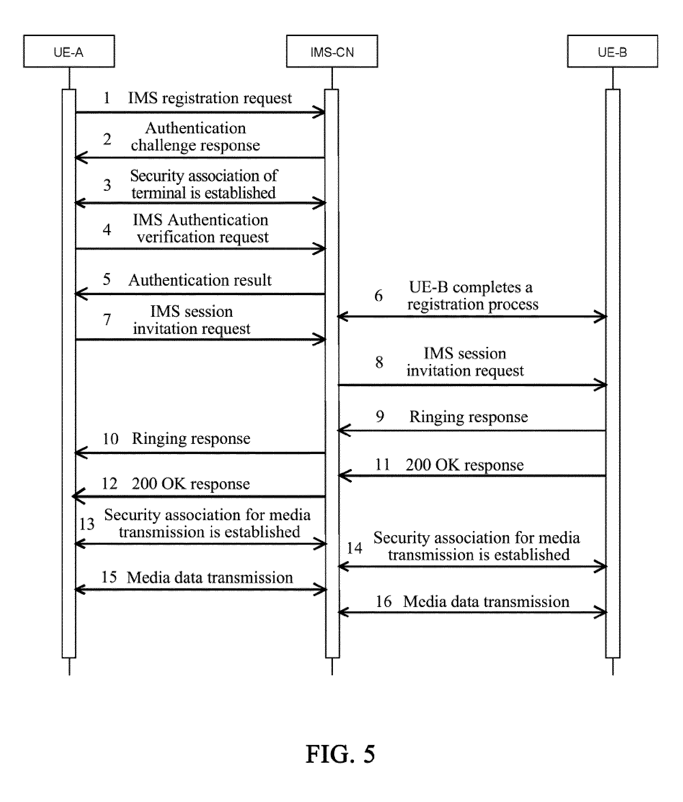

For example, as shown in FIG. 5, a process of the terminal performing registration to the IMS core network includes the following steps.

In step 1, a terminal UE-A sends an IMS registration request message to a P-CSCF in the IMS core network, wherein, the IMS registration request message includes: information of the terminal and first security association information.

Wherein, the information of the terminal can include: an IP address of the terminal, IMS user information and an algorithm list supported by the terminal (including an integrity algorithm, an encryption algorithm and a compression algorithm) so as to perform negotiation on algorithms between the UE and the P-CSCF in the core network; and the first security association information includes: Secure Parameter Index (SPI) information randomly generated by the terminal (called as first SPI information, the SPI information can be in 8 bytes) and port information corresponding to the first SPI information. If multiple security associations exist, it is required to guarantee the uniqueness of the generated SPI information each time, and if the integrity algorithm, encryption algorithm or compression algorithm in the above algorithm list all have multiple specific algorithms, each algorithm has its own priority, and the priority of an algorithm preferred by the terminal is comparatively high, and all the algorithms can be arranged in a decreasing sequence according to the priorities.

In practical applications, the above first SPI information and the port information corresponding to the first SPI information can be SPI values of two signaling security associations and corresponding port numbers (i.e. a calling service data processing port and a called service data processing port).

In step 2, after receiving the IMS registration request message of the terminal, the P-CSCF acquires the IP address of the UE, the IMS user information, the first SPI information and the port information corresponding to the first SPI information, the algorithm list supported by the UE and a pair of port numbers of the UE sending and receiving the SIP information actively and passively from the IMS registration request message of the SIP protocol, and saves the information.

The P-CSCF acquires an Authentication and Key Agreement (AKA) authentication quintuple (called as a first AKA authentication quintuple) according to the IMS user information in the IMS registration request message. For example, the P-CSCF firstly acquires a card key corresponding to the IMS user information (i.e. a key in the ISIM/USIM in the UE-A) from an HSS, and then uses the card key and a random number (the random number can be generated randomly or preset) to obtain the above first AKA authentication quintuple, wherein, the first AKA authentication quintuple includes a first Integrity Key (IK), a first Cipher Key (CK) and a first Response (RES) field. In practical applications, the card key and random number (the random number can be generated randomly or preset) can be adopted to obtain the above first AKA authentication quintuple by using an AKA algorithm.

Then, the P-CSCF returns an authentication challenge message of the IMS registration request message to the terminal, wherein, the authentication challenge message includes: second security association information and information of the P-CSCF. Wherein, the information of the P-CSCF includes: an IP address of the P-CSCF and an algorithm list supported by the P-CSCF (including an integrity algorithm, an encryption algorithm and a compression algorithm); and the second security association information includes: SPI information randomly generated by the P-CSCF (called as second SPI information) and port information corresponding to the second SPI information. If multiple security associations exist, it is required to guarantee the uniqueness of the generated SPI information each time, and if the integrity algorithm, encryption algorithm or compression algorithm in the above algorithm list all have multiple specific algorithms, each algorithm has its own priority, and the priority of an algorithm preferred by the terminal is comparatively high, and all the algorithms can be arranged in a decreasing sequence according to the priorities.

Similarly, in practical applications, the above second SPI information and the port information corresponding to the second SPI information can be SPI values of two signaling security associations and corresponding port numbers (i.e. a calling service data processing port and a called service data processing port).

After the terminal UE-A receives a challenge response message, it can verify whether a challenge response of the P-CSCF is identical with a calculating result of the local ISIM/USIM of the UE-A, thereby completing the identity authentication of the server, and an AKA authentication quintuple of the UE-A (called as a second AKA authentication quintuple) also can be obtained, and an IK (called as a second IK) and a CK (called as a second CK) are obtained from the second AKA authentication quintuple. Therefore, the P-CSCF and the UE-A have shared the information of a pair of keys, and integrity keys and cipher keys required during the establishment of the IPSec-ESP security association for signaling negotiation are extended from the IKs (including the first IK and the second IK) and the CKs (including the first CK and the second CK), and it mainly takes into account of the issue of key lengths of the integrity algorithm and encryption algorithm, for example, an RES algorithm needs a key with 192 bits, but the IK and CK only have 128 bits. At the point, for example, the first 64 bits in the 128 bits of the IK and CK can be duplicated and placed at the tail of the 128 bits, thereby 192 bits are constituted.

In practical application, the above authentication challenge message also can include: a first RES field and the above random number. Therefore, the step of the terminal UE-A verifying whether the challenge response of the P-CSCF is identical with the calculating result of the local ISIM/USIM of the UE-A and then completing the identity authentication of the server can be: an ISIM or a USIM in the terminal using a local card key and the random number in the above authentication challenge message to obtain the second AKA authentication quintuple, wherein, the second AKA authentication quintuple includes: the second IK, the second CK and a second RES field; and the terminal judging whether the second RES field is identical with the first RES field in the above authentication challenge message; and if identical, determining that an identity authentication of the P-CSCF is successful.

In step 3, after going through the foregoing two message interactions (i.e. the above step 1 and step 2), the terminal UE-A and the P-CSCF have finished negotiations on the SPI information, the supported algorithms and the port numbers, and the information for establishing the IPSec-ESP security association for signaling negotiation has been possessed.

Wherein, the terminal UE-A has two groups of security association parameters for establishing the IPSec-ESP security association for signaling negotiation below:
(1) calling service security association parameters: the IP address of the terminal, the IP address of the P-CSCF, a protected client port number of the terminal, the SPI information of the terminal, algorithms with highest priority supported by both the terminal and the P-CSCF (including the integrity algorithm, the encryption algorithm and the compression algorithm), the IK (i.e. the second IK) and the CK (i.e. the second CK);
(2) called service security association parameters: the IP address of the terminal, the IP address of the P-CSCF, a protected client port number of the terminal, another SPI information of the terminal, algorithms with highest priority supported by both the terminal and the P-CSCF (including the integrity algorithm, the encryption algorithm and the compression algorithm), the IK (i.e. the second IK) and the CK (i.e. the second CK).

Similarly, the P-CSCF also has two groups of security association parameters for establishing the IPSec-ESP security association for signaling negotiation below:
(1) calling service security association parameters: the IP address of the P-CSCF, the IP address of the terminal, a protected client port number of the P-CSCF, the SPI information of the P-CSCF, algorithms with highest priority supported by both the P-CSCF and the terminal (including the integrity algorithm, the encryption algorithm and the compression algorithm), the IK (i.e. the first IK) and the CK (i.e. the first CK);
(2) called service security association parameters: the IP address of the P-CSCF, the IP address of the terminal, a protected client port number of the P-CSCF, another SPI information of the P-CSCF, algorithms with highest priority supported by both the P-CSCF and the terminal (including the integrity algorithm, the encryption algorithm and the compression algorithm), the IK (i.e. the first IK) and the CK (i.e. the first CK);

In the above four groups of security association parameters, the algorithms with highest priority supported by both the P-CSCF and the terminal are algorithms supported by both parties selected from the algorithm list, and if there is no intersection set, no corresponding algorithm is used. With the respective security association parameters being utilized, the terminal UE-A and the P-CSCF can establish four groups of IPSec-ESP security associations for signaling negotiation, and then signaling negotiation messages of the terminal UE-A and the P-CSCF can be protected in the four IPSec-ESP security associations for signaling negotiation. According to different ports, a group of security associations of the UE and the P-CSCF is used for protecting the signaling negotiation of calling services of the terminal, and another group of security associations is used for protecting the signaling negotiation of called services of the terminal. Therefore, the integrity and encryption protection can be implemented for the signaling negotiation data of the UE and the P-CSCF.

In step 4, the terminal then sends the calculating result of the ISIM/USIM namely the second RES field to the P-CSCF through an IMS authentication verification request message, so that the server verifies the identity of the terminal, wherein, the IMS authentication verification request message also includes: information of the terminal and first security association information of the terminal (that is, the information of the terminal and the first security association information of the terminal are identical with the information in the above IMS registration request message), so that the P-CSCF can confirm the former security parameter negotiations.

After receiving the IMS authentication verification request message, the P-CSCF verifies whether the information of the terminal and the first security association information of the terminal in the IMS authentication verification request message are identical with the locally saved information at first (i.e. the first SPI value and the port numbers, and the algorithm list supported by the terminal in the IMS registration request message saved in step 2), if inconsistent, it is determined that the registration of the terminal fails; if consistent, it continues to verify whether the second RES filed carried in the IMS authentication verification request message is consistent (identical) with the first RES field obtained from the previous calculation, and if consistent, it is determined that AKA authentication of the terminal is successful and the registration is successful at the point. Therefore, it is implemented that the servers performs identity authentication of the terminal.

The above IMS authentication verification request message must be transmitted in the IPSec-ESP security associations for signaling negotiation of the calling services of the terminal and the P-CSCF, and other persons cannot maliciously intercept the communication information between the terminal and the P-CSCF any more.

In step 5, the P-CSCF sends an authentication result message to the terminal, wherein, an authentication result can be an authentication success or an authentication failure.

The registration process from the terminal to the core network (specifically the P-CSCF) is finished through the above steps 1-5, and the IPSec-ESP security association for signaling negotiation between the terminal and the core network is established in the registration process, which implements the encryption protection and integrity protection for the signaling negotiation data.

In step 6, the terminal UE-B also can complete the process of making a registration to the core network according to the above steps 1-5.

As shown in FIG. 5, the process of performing transmission of media data (contents) of the IMS multimedia through the core network between the terminals (the UE-A and the UE-B) specifically includes the following steps.

In step 7, the UE-A initiates an IMS session invitation request message to the core network, and the message carries media information and SPI information used for establishing the media transmission randomly generated by the UE-A (called as third SPI information) so as to protect secure transmission of the media data. If there are multiple media communications, for example, if audio and video contents are contained at the same time, two SPI information are required (that is, the third SPI information includes two SPI information) to establish two groups of security associations respectively. Wherein, the media information can include: transmission port information of media contents and media description information.

In step 8, after the P-CSCF of the UE-A side receives the IMS session invitation request message, the P-CSCF saves the information in the IMS session invitation request message, and sends the IMS session invitation request message to the P-CSCF of the UE-B side, and the P-CSCF of UE-B informs the MGCF of UE-B to generate SPI information of the MGCF and then send the SPI information of the MGCF to the UE-B; as the called, the UE-B will use the security associations of the called services to perform safety protection for the signaling negotiation.

In step 9, after the UE-B receives the IMS session invitation request message of the P-CSCF, it sends a ringing response message to the P-CSCF of the UE-B to indicate that the UE-B has received the IMS session invitation request message of the UE-A.

In step 10, the IMS core network forwards the ringing response message to the UE-A. The terminal UE-A knows that the UE-B has received the IMS session invitation request message after receiving the ringing response message.

In step 11, the UE-B accepts the session invitation and sends a 200 OK response to the IMS core network of the UE-B, and the 200 OK response carries media formats and audio/video transmission port numbers supported by both the UE-A and the UE-B, and in addition, media transmission SPI information of the UE-B is also carried.

After receiving the 200 OK response message, the P-CSCF of the UE-B side informs the Media Gateway Control Function (MGCF) of the security association information of media transmission, thus, the MGCF of the UE-B and the UE-B shares a group of IPsec-ESP security association parameter information, and the IK and CK are extended from the AKA authentication of the previous signaling negotiation, and the encryption algorithm and the integrity algorithm use the previously selected algorithms.

In step 12, the P-CSCF of the UE-B forwards the 200 OK response message to the P-CSCF of the UE-A, and the P-CSCF of the UE-A informs the MGCF of the UE-A, and the MGCF generates SPI information (called as fourth SPI information) and port numbers for preparing to perform media transmission, and then the 200 OK response message is sent to the UE-A. Thus, the MGCF of the UE-A side and the UE-A also share a group of IPsec-ESP security association parameter information.

In step 13, after going through the message interaction of steps 7-12, the UE-A and UE-B have their respective security association parameter information for media transmission, and the UE-A uses the IK and CK of the previous signaling negotiation and the previously selected integrity algorithm and encryption algorithm to establish the security association with the media gateway of the UE-A, and according to the number of transmission media, there may be one group or multiple groups of security associations for implementing the safety protection for the media data transmission.

In step 14, the UE-B establishes the IPSec-ESP security association for media transmission between the UE-B and the media gateway in which the UE-B is located according to the message interaction information of the steps 7-12, and then the media data transmission between the UE-B and UE-A has been in the safety protection.

In step 15, the UE-A uses the IPSec-ESP security association for media transmission established between the UE-A and the core network to transmit the media contents, which implements various multimedia communication functions, such as audios, videos and pictures.

In step 16, the media contents of the UE-B are transmitted through the previous security associations, and the encryption protection is performed on the media contents by using the IK and CK of the previous signaling negotiation. After the multimedia communication ends, the IPSec-ESP security association for media transmission ends, and the IPSec-ESP security association for signaling negotiation can be maintained until the user logs off.

It can be seen from the above description that the following technical effects are implemented in the above examples: by establishing the IPSec-ESP security association for media transmission between the terminal and the IMS core network, the transmission can be performed through the IPSec-ESP security association for media transmission when performing transmission of the media contents, thereby guaranteeing the security of the media contents transmitted between the terminal and the IMS core network, solving the security problem of multimedia communication in the IMS in the related art, and avoiding that the media contents are maliciously stolen and falsified by others during the transmission between the terminal and the IMS core network.

Apparently, the skilled in the art should understand that the modules or steps of the present document mentioned above can be implemented through a universal calculating device, and they can be concentrated on a single calculating device or distributed in a network consisting of multiple calculating devices. Alternatively, the modules or steps can be implemented through program codes which can be executed by the calculating device, thus, they can be stored in a storage device to be executed by the calculating device, and in some cases, the illustrated and described steps can be executed in an order different from what is described here, or they can be made into multiple integrated circuit modules respectively or multiple modules or steps of them can be made into a single integrated circuit module for implementation. Therefore, the present document is not limited to any combination of hardware and software in a specific form.

The above description is only the preferred examples of the present document, which is not used to limit the present document. The present document can have various modifications and changes for the skilled in the art. All the modifications, equivalent substitutions, improvements and so on made within the spirit and principle of the present document shall fall into the protection scope of the present document.

## Claims

1. An IP MultiMedia Subsystem (IMS) multimedia communication method, comprising:
performing signaling negotiation between a terminal and an IMS core network, and establishing an IP security-Encapsulate Secure Payload (IPSec-ESP) security association for media transmission between the terminal and the IMS core network during the process of signaling negotiation;
performing transmission of media contents through the IPSec-ESP security association for media transmission between the terminal and the IMS core network.

2. The method according to claim 1, wherein,
before performing signaling negotiation between the terminal and the IMS core network, the method further comprises: the terminal performing registration to the IMS core network and an IPSec-ESP security association for signaling negotiation being established between the terminal and the IMS core network during the process of registration; and
performing signaling negotiation between the terminal and the IMS core network comprises: performing signaling negotiation through the IPSec-ESP security association for signaling negotiation between the terminal and the IMS core network.

3. The method according to claim 2, wherein, the terminal performing registration to the IMS core network and the IPSec-ESP security association for signaling negotiation being established between the terminal and the IMS core network during the process of registration comprises:
the terminal sending an IMS registration request message to a Proxy-Call Session Control Function (P-CSCF) in the IMS core network, wherein, the IMS registration request message includes: information of the terminal and first security association information of the terminal;
the P-CSCF saving information in the received IMS registration request message locally, and returning an authentication challenge message to the terminal, wherein, the authentication challenge message includes: second security association information and information of the P-CSCF; and
after the terminal receives the authentication challenge message, establishing the IPSec-ESP security association for signaling negotiation through the first security association information and the second security association information of the P-CSCF between the terminal and the P-CSCF.

4. The method according to claim 3, wherein, the information of the terminal includes: an IP address of the terminal, IMS user information and an algorithm list supported by the terminal; after the P-CSCF saves the information in the received IMS registration request message locally and before the P-CSCF returns the authentication challenge message to the terminal, the method further comprises:
the P-CSCF acquiring a card key corresponding to the IMS user information;
the P-CSCF using the card key and a random number to obtain a first Authentication and Key Agreement (AKA) authentication quintuple, wherein, the first AKA authentication quintuple includes a first Integrity Key (IK), a first Cipher Key (CK) and a first Response (RES) field.

5. The method according to claim 4, wherein, the authentication challenge message further includes: the first RES field and the random number; after the terminal receives the authentication challenge message, the method further comprises:
an IP Multimedia Services Identity Module (ISIM) or a Universal Subscriber Identity Module (USIM) in the terminal using a local card key and the random number to obtain a second AKA authentication quintuple, wherein, the second AKA authentication quintuple includes: a second IK, a second CK and a second RES field;
the terminal judging whether the second RES field is identical with the first RES field; and
if identical, the terminal determining that an identity authentication of the P-CSCF is successful.

6. The method according to claim 5, wherein, after establishing the IPSec-ESP security association for signaling negotiation through the first security association information and the second security association information of the P-CSCF between the terminal and the P-CSCF, the method further comprises:
the terminal sending an IMS authentication verification request message to the P-CSCF through the IPSec-ESP security association for signaling negotiation between the terminal and the P-CSCF, wherein, the IMS authentication verification request message includes: the information of the terminal, the first security association information of the terminal and the second RES field;
after receiving the IMS authentication verification request message, the P-CSCF verifying whether the information of the terminal and the first security association information of the terminal are identical with the information saved locally;
if identical, the P-CSCF continuing to judge whether the second RES field is identical with the first RES field, and in a condition that the second RES field is judged to be identical with the first RES field, determining that an identity authentication of the terminal is successful and the registration is successful; and
the P-CSCF returning an identity authentication success message to the terminal.

7. The method according to claim 5, wherein, the first security association information includes: first Secure Parameter Index (SPI) information randomly generated by the terminal and port information corresponding to the first SPI information, and the second security association information includes: second SPI information randomly generated by the P-CSCF and port information corresponding to the second SPI information, and the information of the P-CSCF includes: an IP address of the P-CSCF and an algorithm list supported by the P-CSCF; establishing the IPSec-ESP security association for signaling negotiation through the first security association information and the second security association information of the P-CSCF between the terminal and the P-CSCF comprises:
the terminal using the first SPI information and the port information corresponding to the first SPI information, the IP address of the P-CSCF, algorithms supported by both the terminal and the P-CSCF, the second IK and the second CK to establish the IPSec-ESP security association for signaling negotiation between the terminal and the P-CSCF, wherein, the algorithms supported by both the terminal and the P-CSCF are selected from the algorithm list supported by the terminal and the algorithm list supported by the P-CSCF;
the P-CSCF using the second SPI information and the port information corresponding to the second SPI information, the IP address of the terminal, the algorithms supported by both the terminal and the P-CSCF, the first IK and the first CK to establish the IPSec-ESP security association for signaling negotiation between the P-CSCF and the terminal.

8. The method according to claim 7, wherein, performing signaling negotiation through the IPSec-ESP security association for signaling negotiation between the terminal and the IMS core network and establishing the IPSec-ESP security association for media transmission between the terminal and the IMS core network during the process of signaling negotiation comprises:
the terminal sending an IMS session invitation request message to the P-CSCF, wherein, the IMS session invitation request message includes media information of the terminal and third SPI information randomly generated by the terminal;
the P-CSCF saving information in the received IMS session invitation request message, and forwarding the IMS session invitation request message to another terminal invited by the IMS session invitation request message;
after receiving a response message returned by said another terminal, the P-CSCF informing a Media Gateway Control Function (MGCF) in the IMS core network to randomly generate fourth SPI information, and forwarding the response message to the terminal, wherein, the response message includes the fourth SPI information;
the terminal using the third SPI information, the algorithms supported by both the terminal and the P-CSCF, the second IK and the second CK to establish the IPSec-ESP security association for media transmission between the terminal and the MGCF; and
the MGCF using the fourth SPI information, the algorithms supported by both the terminal and the P-CSCF, the first IK and the first CK to establish the IPSec-ESP security association for media transmission between the MGCF and the terminal.

9. The method according to claim 8, wherein, performing transmission of the media contents through the IPSec-ESP security association for media transmission between the terminal and the IMS core network comprises:
the terminal using the second IK, the second CK and the algorithms supported by both the terminal and the P-CSCF to cipher media contents required to be transmitted, and transmitting the ciphered media contents to the MGCF; and the MGCF using the first IK, the first CK and the algorithms supported by both the terminal and the P-CSCF to decipher the ciphered media contents;
or, the MGCF using the first IK, the first CK and the algorithms supported by both the terminal and the P-CSCF to cipher the media contents required to be transmitted, and transmitting the ciphered media contents to the terminal; and the terminal using the second IK, the second CK and the algorithms supported by both the terminal and the P-CSCF to decipher the ciphered media contents.

10. An IP MultiMedia Subsystem (IMS) multimedia communication system, comprising: a terminal and an IMS core network, wherein,
the terminal is configured to: perform signaling negotiation with the IMS core network, and establish an IP security-Encapsulate Secure Payload (IPSec-ESP) security association for media transmission between the terminal and the IMS core network during the process of signaling negotiation, and perform transmission of media contents through the IPSec-ESP security association for media transmission between the terminal and the IMS core network.

11. The system according to claim 10, wherein, the terminal is further configured to: before performing signaling negotiation with the IMS core network, perform registration to the IMS core network, and establish an IPSec-ESP security association for signaling negotiation between the terminal and the IMS core network during the process of registration, and perform signaling negotiation with the IMS core network through the IPSec-ESP security association for signaling negotiation.

12. A terminal, comprising: a negotiation and establishment module, configured to: perform signaling negotiation with an IP MultiMedia Subsystem (IMS) core network, and establish an IP security-Encapsulate Secure Payload (IPSec-ESP) security association for media transmission between the terminal and the IMS core network during the process of signaling negotiation; and
a media transmission module, configured to: send media contents to the IMS core network and/or receive media contents from the IMS core network through the IPSec-ESP security association for media transmission.

13. The terminal according to claim 12, further comprising: a registration and establishment module, wherein:
the registration and establishment module is configured to: before the negotiation and establishment module performs signaling negotiation with the IMS core network, perform registration to the IMS core network, and establish an IPSec-ESP security association for signaling negotiation between the registration and establishment module and the IMS core network during the process of registration; and
the negotiation and establishment module is configured to: perform signaling negotiation with the IMS core network through the IPSec-ESP security association for signaling negotiation.

14. An IP MultiMedia Subsystem (IMS) core network, comprising:
a negotiation and establishment module, configured to: perform signaling negotiation with and a terminal, and establish an IP security-Encapsulate Secure Payload (IPSec-ESP) security association for media transmission between the negotiation and establishment module and the terminal during the process of signaling negotiation; and
a media transmission module, configured to: send media contents to the terminal and/or receive media contents from the terminal through the IPSec-ESP security association for media transmission.

15. The IMS core network according to claim 14, further comprising: a signaling negotiation security association establishment module, wherein:
the signaling negotiation security association establishment module is configured to: before the negotiation and establishment module performs signaling negotiation with the terminal, accept a registration of the terminal, and establish an IPSec-ESP security association for signaling negotiation between the signaling negotiation security association establishment module and the terminal during the process of registration; and
the negotiation and establishment module is configured to: perform signaling negotiation with the terminal through the IPSec-ESP security association for signaling negotiation.
